Europäisches Patentamt

European Patent Office

Office européen des brevets

(19)

(11) Veröffentlichungsnummer: **0 367 998**
**A2**

(12) # EUROPÄISCHE PATENTANMELDUNG

(21) Anmeldenummer: **89118690.0**

(22) Anmeldetag: **07.10.89**

(51) Int. Cl.⁵: **B01D 53/36**

(30) Priorität: **21.10.88 DE 3835934**

(43) Veröffentlichungstag der Anmeldung:
**16.05.90 Patentblatt 90/20**

(84) Benannte Vertragsstaaten:
**AT BE DE FR GB IT NL**

(71) Anmelder: **BAYER AG**

**D-5090 Leverkusen 1 Bayerwerk(DE)**

(72) Erfinder: **Klaumann, Karl-Heinz, Dipl.-Ing.**
**Deswatinesstrasse 75**
**D-4150 Krefeld(DE)**
Erfinder: **Soppe, Alfred, Dipl.-Ing.**
**Heyerweg 16**
**D-4174 Issum 2(DE)**
Erfinder: **Engels, Hans, Dr.**
**Hitdorfer Strasse 1**
**D-4018 Langenfeld(DE)**

(54) **Verfahren zur Entfernung von Schwefeldioxid und Chlorwasserstoff aus heissen Gasen.**

(57) Die vorliegende Erfindung betrifft ein Verfahren zur Entfernung von Schwefeldioxid und Chlorwasserstoff aus heißem Abgas bei Temperaturen von 45 bis 70°C, wobei $SO_2$ katalytisch an feuchter Aktivkohle zu $H_2SO_4$ umgesetzt und mit Wasser als 3- bis 20%ige Dünnsäure ausgespült wird. Die Verdüsung der Dünnsäure im heißen Abgas bewirkt die Verdampfung von Wasser und eine Erhöhung der Schwefelsäurekonzentration auf 40 bis 80 %. Chlorwasserstoff, der an der feuchten Aktivkohle durch Wasser absorbiert wird, wird aus der 40 bis 80%igen Schwefelsäure ausgetrieben und in einem folgenden Wäscher erneut in Wasser absorbiert und als 5- bis 15%ige Salzsäure ausgeschleust.

FIG. 1

EP 0 367 998 A2

EP 0 367 998 A2

**Verfahren zur Entfernung von Schwefeldioxid und Chlorwasserstoff aus heißen Gasen**

Die vorliegende Erfindung betrifft ein Verfahren zur Entfernung von Schwefeldioxid und Chlorwasserstoff aus Abgasen bei gleichzeitiger Herstellung von Schwefelsäure und Salzsäure, wobei $SO_2$ an feuchter Aktivkohle katalytisch zu $H_2SO_4$ oxidiert und durch Wasser ausgespült wird.

Für Verfahren zur kostengünstigen, umweltfreundlichen Entfernung von Schwefeldioxid und Chlorwasserstoff aus Gasen, die in Kraftwerken oder in der chemischen Industrie anfallen, besteht aktueller Bedarf. Die derzeit am häufigsten angewendeten Verfahren überführen Schwefeldioxid und Chlorwasserstoff in Calciumverbindungen, die in der Regel nach Entwässerung einer Deponie zugeführt werden und damit zu keiner Entlastung der gesamten Stoffbilanz führen.

Weiterhin ist aus DE-A 3435931 ein Verfahren bekannt, das unter Ausnutzung der Abwärme und der katalytischen Oxidation von Schwefeldioxid zu $H_2SO_4$ und Absorption von Chlorwasserstoff in 5 bis 25%iger Schwefelsäure mit anschließendem Strippen eines Gemisches aus hochkonzentrierter - und niedrigkonzentrierter, chlorwasserstoffhaltiger Schwefelsäure eine hochkonzentrierte Schwefelsäure und Salzsäure erzeugt.

Die für diesen Zweck ungünstigen Gleichgewichtsbedingungen haben zur Folge, daß sich in der Anlage ein relativ großer Chlorwasserstoffstrom einstellt, der einerseits bei der Aufkonzentrierung in die Gasphase gelangt, andererseits aber nach der Absorption durch die dünne Schwefelsäure nicht befriedigend gestrippt werden kann, da hier aufgrund der niedrigeren Schwefelsäurekonzentration eine höhere Löslichkeit von Chlorwasserstoff besteht als im Aufstärker. Auch andere Stoffe, wie z.B. HF, können sich bei dieser Fahrweise anreichern und zu Korrosionsproblemen führen.

Ziel der vorliegenden Erfindung ist ein wirtschaftliches, betriebssicheres, umweltfreundliches und einfaches Verfahren zur Verfügung zu stellen, bei dem die beschriebenen Nachteile nicht auftreten.

Das Ziel wird erreicht, indem das zu behandelnde Abgas zur Abkühlung und zur Nutzung der Abwärme zunächst in einen mit 40 bis 80%iger Schwefelsäure betriebenen Wäscher eingeleitet wird.

Gegenstand dieser Erfindung ist somit ein Verfahren zur Entfernung von Schwefeldioxid und Chlorwasserstoff aus Abgasen bei gleichzeitiger Herstellung von Schwefelsäure und Salzsäure, wobei $SO_2$ an feuchter Aktivkohle katalytisch zu $H_2SO_4$ oxidiert und durch Wasser als Dünnsäure ausgespült wird, wobei das anfallende Gemisch aus dünner Salz- und Schwefelsäure durch Verdampfung von Wasser und Chlorwasserstoff im heißen Rauchgasstrom auf eine dem HCl - $H_2SO_4$ - Wasser-Gleichgewicht entsprechende Schwefelsäure mit einer Konzentration von 40 bis 80 % aufkonzentriert wird.

In einem nachfolgenden Wäscher kann der Chlorwasserstoff zu einem Teil durch 5 bis 15%ige Salzsäure absorbiert werden. Durch Frischwasserzufuhr und Säureabzug wird die Konzentration der Salzsäure gesteuert.

In einer bevorzugten Ausführungsform des erfindungsgemäßen Verfahrens wird also der zu entfernende Chlorwasserstoff durch Auswaschen des Gasstromes in Salzsäure überführt.

Es kann aber auch vorteilhaft sein, daß der zu entfernende Chlorwasserstoff durch Auswaschen nur eines Teilstromes in Salzsäure überführt wird.

Ein dem Dampfdruck entsprechender Teil des Chlorwasserstoffs geht dabei mit dem Gasstrom weiter in den Aktivkohlereaktor. Das Gas durchströmt hier eine Aktivkohleschüttung.

Dabei erfolgt die katalytische Oxidation von Schwefeldioxid zu $H_2SO_4$ an der feuchten, intermetierend oder kontinuierlich mit Wasser bedüsten Aktivkohle. Dabei wird auch der Rest an Chlorwasserstoff von der Lösung absorbiert. Das gereinigte Gas verläßt die Anlage. Das entstandene Gemisch aus Salz- und Schwefelsäure wird in einen Wäscher geleitet. Die gewünschte Säurekonzentration im Wäscher kann innerhalb der Grenzen durch Wasserzugabemenge gesteuert werden.

Eine bevorzugte Ausführungsform des erfindungsgemäßen Verfahrens ist dadurch gekennzeichnet, daß die Auswaschung des Chlorwasserstoffes in mehreren parallel oder in Reihe geschalteten Wäschern mit unterschiedlichen Säurekonzentrationen erfolgt.

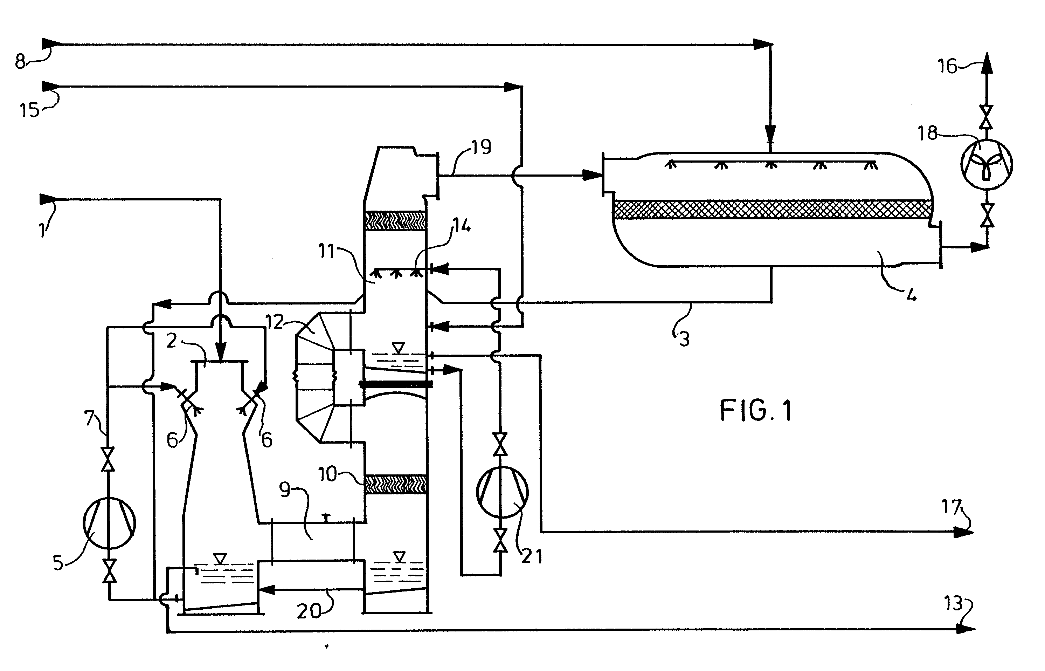

Das erfindungsgemäße Verfahren wird anhand Fig. 1 verdeutlicht. Es wird eine Anlage dargestellt, die ein Reingas mit einem $SO_2$-Gehalt kleiner 400 mg/m$^3$ n und einem HCl-Gehalt kleiner 30 mg/m$^3$ n gewährleistet. Gleichzeitig wird die Abwärme zur Aufkonzentrierung von Schwefel- und Salzsäure verwendet.

Das Abgas (1) wird in den Wäscher (2) geleitet, wo es einer Wäsche mit 40 bis 80%iger Schwefelsäure unterzogen wird. Die Schwefelsäure wird aus dem Sumpf des Wäschers (2) unter Zugabe der Dünnsäure (3) aus dem Aktivkohlereaktor (4) über die Pumpe (5) und die Düsen (6) im oberen Teil des Wäschers (2) im heißen Abgas (1) zerstäubt.

Dabei wird ein dem Gleichgewicht entsprechender Zustand erreicht. Das heißt, das Gas kühlt sich ab

2

und nimmt aus der Waschflüssigkeit (7) Wasser auf. Die Temperatur im Wäscher (2) wird durch die Gaseintrittstemperatur, die Anfangsfeuchte und durch die im Aktivkohlereaktor aufgegebene Wassermenge (8) bestimmt. Die Gasaustrittstemperatur (9) liegt je nach gewünschter Säurekonzentration zwischen 80 und 110°C.

Die gewonnene 40- bis 80-prozentige Schwefelsäure wird über den abgetauchten Überlauf (13) abgeleitet.

Der Gasstrom (1) wird im Wäscher (2) mit Chlorwasserstoff aus dem Dünnsäurestrom (3) angereichert.

Über den Tropfenabscheider (10) wird das Abgas (9) in den Wäscher (11) geleitet. Die im Tropfenabscheider (10) abgeschiedenen Tropfen werden über die Rohrleitung (20) in den Wäscher (2) zurückgeleitet.

Im Wäscher (11) wird das eintretende Abgas (12) mit Salzsäure aus dem Wäschersumpf (11) im Gegenstrom gewaschen. Die Waschflüssigkeit wird über die Pumpe (21) und die Düsen (14) im Kreis gepumpt. In den Wäscher (11) wird soviel Wasser (15) eingespeist, daß

a) die erforderliche Chlorwasserstoffkonzentration im Reingas (16) erreicht wird und

b) eine möglichst hochkonzentrierte Salzsäure im abgetauchten Überlauf (17) erzielt wird.

Die Löslichkeit von $SO_2$ in Salzsäure nimmt mit steigender Salzsäurekonzentration ab, so daß ein nur geringer $SO_2$-Gehalt in der ablaufenden Salzsäure zu verzeichnen ist.

Das Abgas (12) wird im Wäscher (11) weiter abgekühlt und gelangt nahezu wasserdampfgesättigt mit einer Temperatur von 50 bis 70°C (19) in den Aktivkohlereaktor (4).

Im Aktivkohlereaktor (4) erfolgt die katalytische Oxidation von $SO_2$ zu $SO_3$ an der Aktivkohle. Mit dem Wasser (8) wird sodann eine dünne Schwefelsäure gebildet, die außerdem noch den im Wäscher (11) nicht absorbierten Chlorwasserstoff aufnimmt. Das entstandene Säuregemisch (3) wird in den Wäscher (2) geleitet. Das gereinigte Abgas (16) wird mit einer Temperatur von 50 bis 70°C über den Ventilator (18) abgeleitet.

Die Unterdruckfahrweise mit einem nachgeschalteten Ventilator (18) ist vorteilhaft, weil so bei Reparaturen und Wartungsarbeiten kein Abgas aus den Wäschern austreten kann.

Im folgenden wird die Erfindung beispielhaft erläutert, ohne daß hierzu eine Einschränkung zu sehen ist.

Beispiel

Im nachfolgenden Beispiel werden die Teilkomponenten der einzelnen Stoffströme mit den dazugehörigen Temperaturen angegeben. Die Wärmeverluste der einzelnen Apparate wurden berücksichtigt.

Die Komponenten lauten:

1. Wasser $H_2O$
2. Chlorwasserstoff HCl
3. Schwefelsäure $H_2SO_4$
4. Luft
5. Schwefeldioxid $SO_2$

| Abgasstrom (1) zum Wäscher (2) | kg/h |
|---|---|
| 1. $H_2O$ | 11200 |
| 2. HCl | 76 |
| 4. Luft | 82560 |
| 5. $SO_2$ | 143 |
| | 93979 |
| Temperatur [°C]: 180 | |

| Abgas (9) aus Wäscher (2) zum Wäscher (11) | kg/h |
|---|---|
| 1. $H_2O$ | 17290 |
| 2. HCl | 108 |
| 4. Luft | 82560 |
| 5. $SO_2$ | 143 |
| | 100101 |
| Temperatur [°C]: 100 | |

| Abgas (19) aus Wäscher (11) zum Aktivkohlereaktor (4) | |
|---|---|
| | kg/h |
| 1. $H_2O$ | 19421 |
| 2. HCl | 32 |
| 4. Luft | 82560 |
| 5. $SO_2$ | 143 |
| | 102156 |
| Temperatur [°C]: 72 | |

| Abgas (16) aus Aktivkohlereaktor (4) | |
|---|---|
| | kg/h |
| 1. $H_2O$ | 18841 |
| 2. HCl | 1 |
| 4. Luft | 82560 |
| 5. $SO_2$ | 24 |
| | 101426 |
| Temperatur [°C]: 67 | |

Die $SO_2$-Konzentration im Abgas ist eine Funktion der Aktivkohleschüttung und der Temperatur.

| Wasser (8) zum Aktivkohlereaktor (4) | |
|---|---|
| | kg/h |
| 1. $H_2O$ | 6758 |
| Temperatur [°C]: 20 | |

| Säuregemisch (3) aus Aktivkohlereaktor zum Wäscher (2) | |
| --- | --- |
| | kg/h |
| 1. $H_2O$ | 6290 |
| 2. HCl | 31 |
| 3. $H_2SO_4$ | 183 |
| | $\overline{6504}$ |
| Temperatur [°C]: 67 | |

| Schwefelsäure (13) aus Wäscher (2) | |
| --- | --- |
| | kg/h |
| 1. $H_2O$ | 162 |
| 2. HCl | 0,03 |
| 3. $H_2SO_4$ | $\underline{183}$ = 53 % |
| | 345 |
| Temperatur [°C]: 100 | |

| Wasser (15) zum Wäscher (11) | |
| --- | --- |
| 1. $H_2O$ | kg/h |
| | $\overline{3000}$ |
| Temperatur [°C]: 20 | |

Salzsäure (17) aus Wäscher (11)

|  |  | kg/h |
| --- | --- | --- |
| 1. | $H_2O$ | 869 |
| 2. | HCl | $\underline{75}$ = 8 % |
| | | 944 |

Temperatur [°C]: 72

Die Konzentration des Chlorwasserstoffes im Abgas ist Funktion der Salzsäurekonzentration (17).

## Ansprüche

1. Verfahren zur Entfernung von Schwefeldioxid und Chlorwasserstoff aus Abgasen bei gleichzeitiger Herstellung von Schwefelsäure und Salzsäure, wobei $SO_2$ an feuchter Aktivkohle katalytisch zu $H_2SO_4$ oxidiert und durch Wasser als Dünnsäure ausgespült wird, dadurch gekennzeichnet, daß das anfallende Gemisch aus dünner Salz- und Schwefelsäure durch Verdampfung von Wasser und Chlorwasserstoff im heißen Rauchgasstrom auf eine dem HCl - $H_2SO_4$ -Wasser-Gleichgewicht entsprechende Schwefelsäure mit einer Konzentration von 40 bis 80 % aufkonzentriert wird.

2. Verfahren gemäß Anspruch 1, dadurch gekennzeichnet, daß der zu entfernende Chlorwasserstoff durch Auswaschen des Gasstromes in Salzsäure überführt wird.

3. Verfahren gemäß Anspruch 1, dadurch gekennzeichnet, daß der zu entfernende Chlorwasserstoff durch Auswaschen eines Teilgasstromes in Salzsäure überführt wird.

4. Verfahren gemäß einem oder mehrerer der Ansprüche 1 bis 3, dadurch gekennzeichnet, daß die Auswaschung des Chlorwasserstoffes in mehreren parallel oder in Reihe geschalteten Wäschern mit unterschiedlichen Säurekonzentrationen erfolgt.

FIG. 1

EP 0 367 998 A2